# EUROPEAN PATENT APPLICATION

(11) **EP 2 261 833 A1**
(43) Date of publication of application: **15.12.2010**
(21) Application number: 09380072.0
(22) Date of filing: 06.04.2009
(51) Int. Cl.: G06K 7/00, G06Q 20/00

(54) **Automatic payment system for the urban parking phases of vehicles using radio frequency (RFID)**

(71) Applicant: Onsom, S.L., 07300 Inca (Balleares) (ES)
(72) Inventor: Catala Mora, Bernat, 07300 Inca (Baleares) (ES); Pardo Calderon, Vicente, 07300 Inca (Baleares) (ES)
(74) Representative: Manzano Cantos, Gregorio

(57) **Abstract**

The invention relates to an automatic payment system for the urban parking phases of vehicles using radio frequency (RFID), contemplating the implementation of a hybrid card for radio frequency identification (RFID-smartcard) which is installed inside the vehicle, integrated by blocks into which the system, together with the communication protocols used, has been divided, and has a series of buttons and an LCD display for the user to interact with the system without needing any other additional device and in which an ultra high frequency (UHF) RFID tag reader/writer, together with a passive tag adhered thereto, is placed, the objective of which will be to read and write the necessary data on the passive tag, which can in turn be read by an external, portable, neither fixed nor stationary RFID reader.

## Description

### Specification

According to the title of the invention, the object thereof consists of a system for managing the payment, from the actual vehicle, of the regulated urban parking phases controlled from the exterior by means of a radio frequency identification (RFID) reader and in connection with the operative urban parking control center by means of an electronic smartcard with top-up credit, which smartcard can be topped up through any usual interbank or financing line and is used up, depleted or diminished through the successive payment of parking rates or fees, being controlled directly by the user, and the system, through the actual card.

Another detail of the invention is that the system is organized in a small electronic computer structure installed in the actual vehicle and consists of a (9V) power source connected to the actual battery of the vehicle or to small solar energy photovoltaic panels, or to any other power source.

One advantage of the system is that the operation and performance thereof is organized by the card (Pic-smartcard) that the user has, without which it would be impossible to operate the system, assuring that any act of vandalism on the equipment will be ineffective, and it makes the parking meters and posts on the street unnecessary in the event that they are to be replaced. The reading means are portable means that the operator can use in a large area, traveling randomly in such area, registering through the antenna (RFID tag) all the vehicles provided with the system entering the frequency and distance covered by the reader, being able to verify the status of each of them, and especially controlling those vehicles presenting any anomaly or irregularity.

### Background of the Invention:

The different control systems for regulated urban parking are made up of parking meters installed on the street where the user has to deposit an amount for the parking time he or she wishes to use, either paying it directly (in cash), or by means of a private card of the management company, or in some countries by means of the actual interbank credit card, the verification being checked by physical inspectors who visually read the card or, in other more sophisticated cases, by means of optical readers.

The state of the art comprises P ES 2 294 938, entitled "Sistema inalámbrico para pago de aparcamiento O similar", (Wireless System for Parking Payment or the like), owned by Joseph Piera I Queralt, comprising (stationary) receiver stations located on the street with a radio frequency transmitter, a microcontroller and a computer connection and user devices installed in the vehicle, more specifically in a place directly located and visible in a direction towards and close to the pre-installed or fixed receiver station.

Another background document is WO2005109348 (A1) owned by Telecom Italia S.p.A. et. al, entitled "System for and Method of Automating Parking Payment by Using Electronic Tags" It relates to a system for automating parking payment using the terminals of a user provided with wireless communication functions allowing access to a wireless communication network, **characterized in that** the system consists of: electronic tag readers/writers, said readers/writers being associated with the user terminals; and electronic tags to be carried on users' vehicles, each tag having electronic circuitry where a respective identification code is stored and into which a user can input information concerning a parking event by means of his/her terminal.

### Description of the Invention

According to the invention, the general structure of the project contemplates the implementation of a hybrid card for radio frequency identification (RFID-smartcard) integrated by blocks into which the system, together with the communication protocols used, has been divided.

The card has a series of buttons and an LCD display for the user to interact with the system without needing any other additional device. An ultra high frequency (UHF) RFID tag reader/writer, together with a passive tag adhered thereto, is also placed on the same card. The objective of the RFID reader/writer will be to read and write the necessary data on the passive tag, which can in turn be read by an external, preferably portable, neither fixed nor stationary, RFID reader. The communication between the passive tag and the card or between the tag and the external RFID reader follows the ISO 18000-6c protocol.

The card also has an interface which allows communicating with a SmartCard reader/writer following the ISO 7816 protocol. This interface will serve to modify the internal data of the actual card, such as for example the total balance, charging information and many others.

The invention comprises a series of documents in which detailed information about how each of the previous subsystems has been implemented can be found:
- Design and implementation of an RFID interrogator:
   RFID subsystem
- Pic-SmartCard user manual for the use of the card from a Smart Card reader/writer.
- Pic-SmartCard documentation: technical description of the smartCard system.

Finally, a detailed description can be found about how to make the physical connection between the different components and about the coding of the data in the passive RFID tag. The coding of the information contained in the tag will subsequently be read by an external, neither fixed nor stationary, RFID reader.

The prototype according to the invention consists of a card, which can be topped up many times, which will allow automatic payment in both outdoor (ORA (Parking Regulation Ordinance) areas) and indoor (parking lots) regulated parking areas, without needing to use ticket-dispensing and/or payment machines.

Said card will be placed inside the vehicle and will serve as a method of automatic parking payment.

Upon activating the card, and once the parking area has been chosen, the topped up balance will be deducted little by little. This deduction will be constant, customized by each company providing the parking service and will depend on the chosen area.

Upon deactivating the card, the latter is capable of conserving the available balance for the next operation. The card allows viewing the time and the remaining balance among other elements by means of an LED.

The display is placed in the low consumption mode to save energy.

The personnel in charge of controlling the parking of vehicles can remotely control and communicate with the card by means of an RFID reader, and check, among other things, if the parked vehicle has a card, know if the user has activated it, the chosen area, the start time, the available balance and any other information.

This system is still compatible with traditional ticket systems and is especially intended for those users who frequently use regulated parking services. These users may purchase the cards and top them up in authorized establishments.

The card can be pre- and re-programmed to update fields of rates, areas and other data.

This invention involves an advantage for users of regulated parking services because:
- Walking to dispensing and/or payment machines is prevented.
- It is not necessary to have cash.
- It is comfortable and safe.
- It is time-saving and only the time during which the parking is actually being used is paid for.

It is also an improvement for provider companies because:
- It allows remotely controlling the parked vehicles with a smaller number of people.
- It increases productivity of the controllers.
- It allows reducing the cost in the management of regulated parking areas.
- It is safer and more efficient since it prevents having to travel so frequently to the machines to collect the money.
- By means of the top-up of the balance, the company is ensured liquidity and reduces micropayments.
- It is more ecological and cleaner, since the use of paper is considerably reduced.

There is currently no card with these functionalities in regulated parking areas because up until now it was not possible to update the information stored in a passive RFID tag. This involves an advantageous advance for all those supports using RFID-based technologies. It can be stated that the invention provides an RFID which not only supports data input, but also allows the information which is stored in the tag to be updated and/or re-written based on the parameters established in a microcontroller and a transmitter-receiver (transceiver).

During the development of the prototype, a portable integrated tag reader-writer (transceiver) has been created which allows reading and writing passive RFID tags. This reader-writer has been constructed using standard UHF (Ultra High Frequency) components already existing on the market, which have allowed considerably reducing costs and decreasing the consumption with respect to other already existing readers-writers.

Up until now, tags could only be read and updated by means of the actions of an RFID reader-writer.

And as a result of the joint action of the microcontroller and the transceiver, transmitter-receiver, of the invention, it has been achieved that the information is updated automatically and following configurable parameters. In plain language it could be stated that the invention provides a "smart tag". This was not possible either up until now.

A broader idea of the features of the invention will be provided below, upon making reference to the sheets of drawings attached to this specification, in a somewhat schematic manner and merely by way of example, depicting the preferred and essential details of the invention.

### In the Drawings:

Figure 1 is a schematic view of the general structure of the system.
Figures 2.0; 2 and 2.1 is a schematic view of the main control board with the control of the smartcard, having:
   o Image file: smarcard1.bmp
   o Schematic eagle file: smartcard\PCB\placa dsPIC smartcard\placa.sch
Figure 3 is a schematic view of the RFID transmission board having:
   o Image file: RFID transmitter.bmp
   o Schematic eagle file: RFID\PCB\Transmitter\proyecto.sch
Figure 4 is a schematic view of the RFID receiving board comprising:
   o Image file: RFID receiver.bmp
   o Schematic eagle file: RFID\PCB\amplificador\proyecto.sch
Figure 5 is a schematic view of the RFID insulation board having:
   o Image file: RFID insulation.bmp
   o Schematic eagle file: RFID\PCB\amplificador\proyecto.sch
Figure 6 is a schematic view of the integrated power supply board having:
   o Image file: power supply board.bmp
   o Schematic eagle file: smartcard\PCB\placa baterias reg\
Figure 7 is a schematic view of the fusion board consisting of:
   o Image file: interface.bmp
   o Schematic eagle file: fusion\intercon\inmterfaceBl.sch

### Preferred Embodiment of the Invention

A preferred embodiment of the invention is interpreted according to the previous description and that of said illustrations.

Therefore, the card (1) has a series of buttons (2) and an LCD display (3) for the user to interact with the system without needing any other additional device. An ultra high frequency (UHF) RFID tag reader/writer (4) together with a passive tag (5) adhered thereto and with the interposition of the smart transmitter/receptor (transceiver) (8) with UHF RFID technology has also been placed on the same card (1). The objective of the RFID reader/writer (4) will be to read and write the necessary data on the passive tag (5), which can in turn be read by an external RFID reader (6), a portable, neither fixed nor stationary, reader. The communication between the passive tag (5) and the card (1) or between the tag (5) and the external RFID reader (6) follows the ISO 18000-6c protocol.

The card (1) also has an interface (7) which allows communicating with a SmartCard reader/writer (4) following the ISO 7816 protocol. This interface (7) will serve to modify the internal data of the actual card (1), such as for example the total balance, charging information and many others.

The invention comprises a series of documents in which detailed information about how each of the previous subsystems has been implemented can be found:
- Design and implementation of an RFID interrogator:
   RFID subsystem (8)
- Pic-SmartCard user manual for the use of the card from a Smart Card reader/writer (4).
- Pic-SmartCard documentation: technical description of the smartCard system (7).

Finally, a detailed description is provided about how to make the physical connection between the different components and about the coding of the data in the passive RFID tag (5). The coding of the information contained in the tag (5) will subsequently be read by an external, portable, neither fixed nor stationary, RFID reader (6).

The buttons (2) interact with a general microcontroller (9).

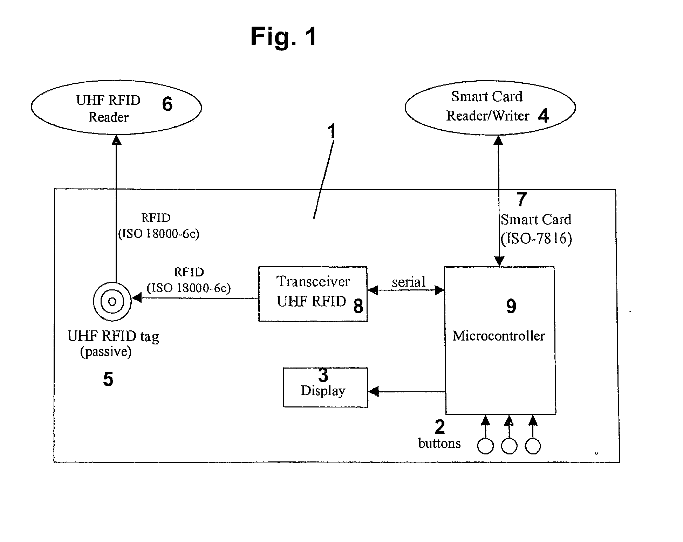

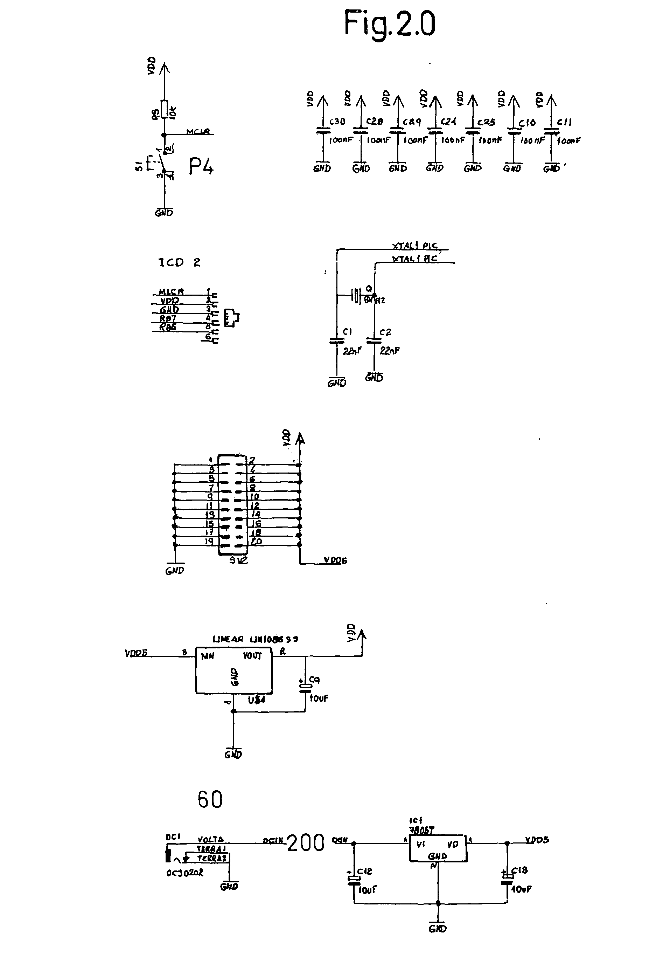

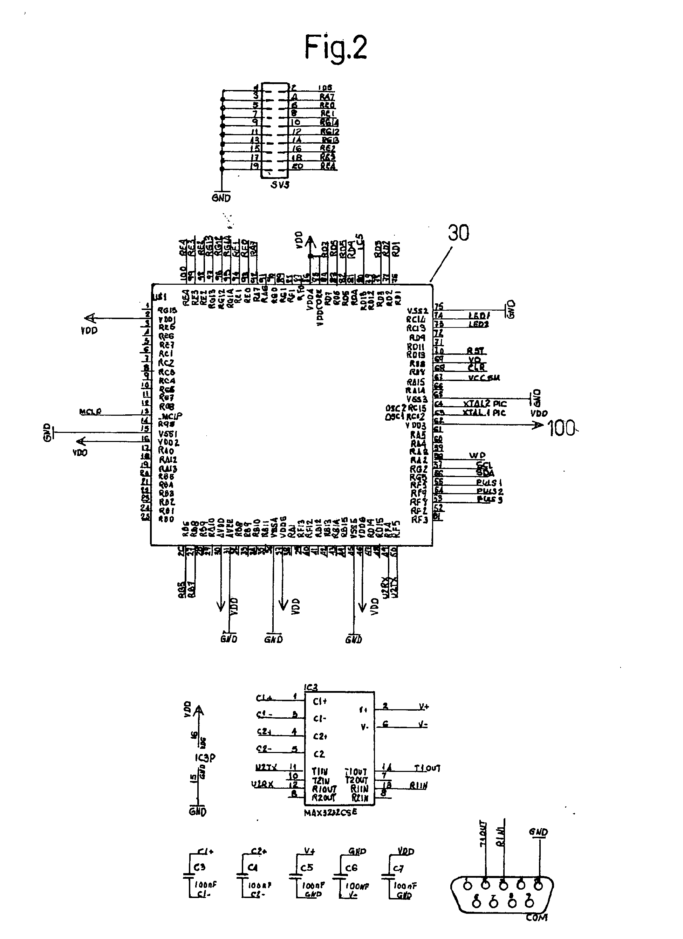

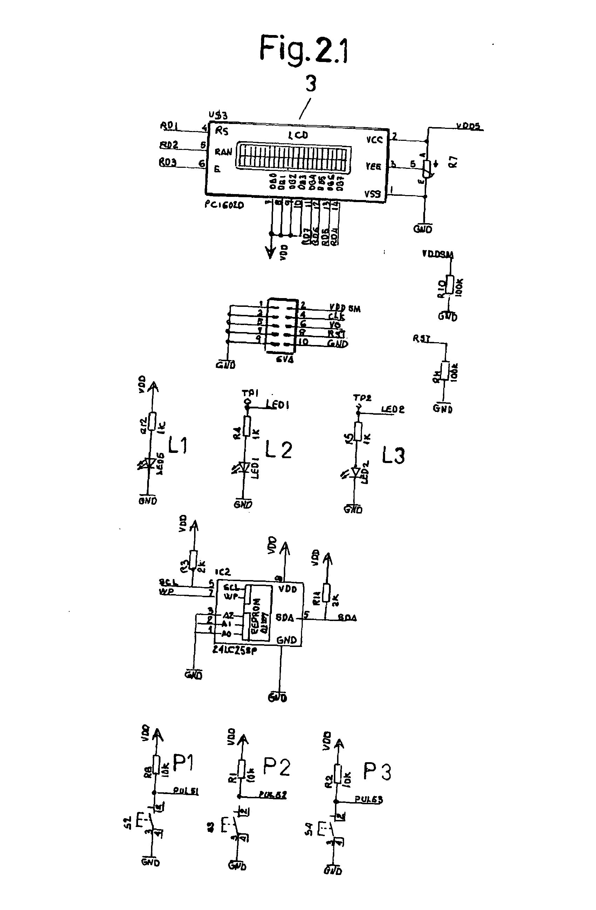

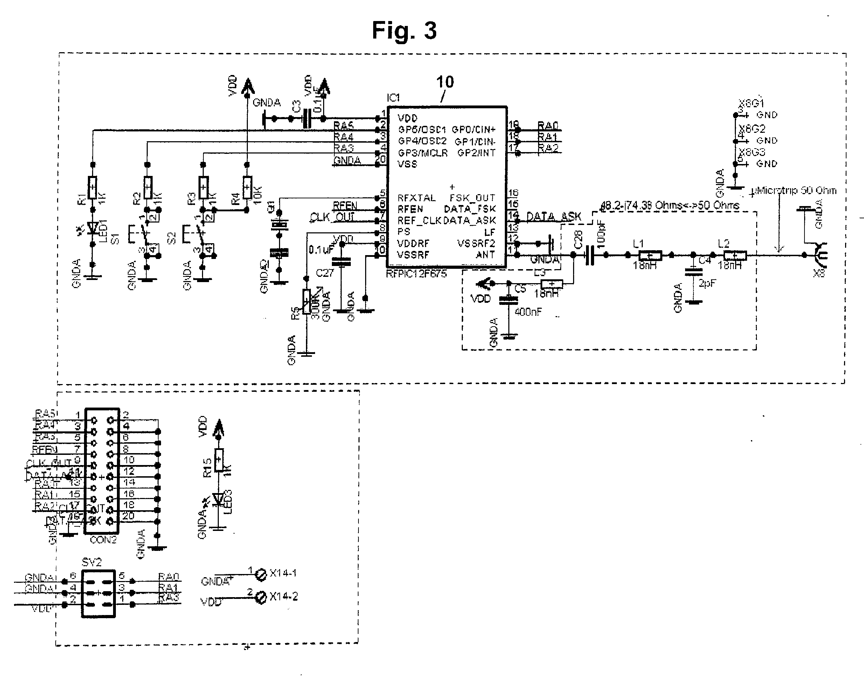

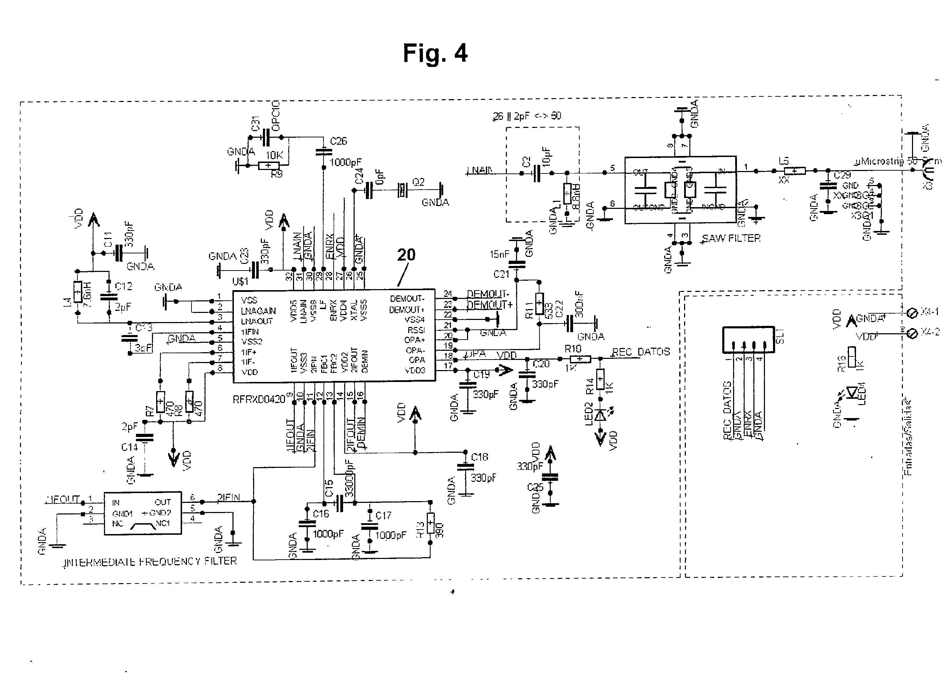

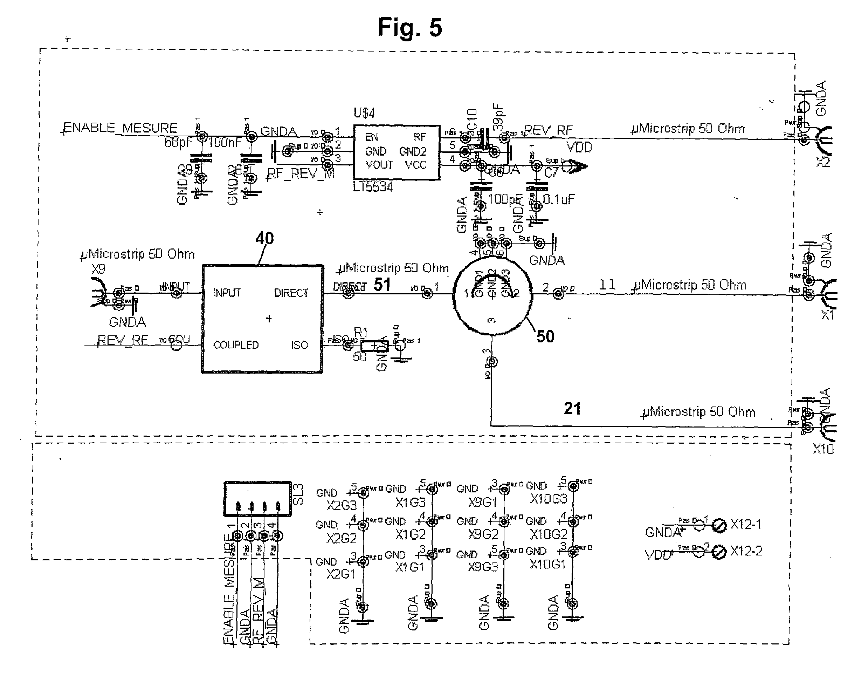

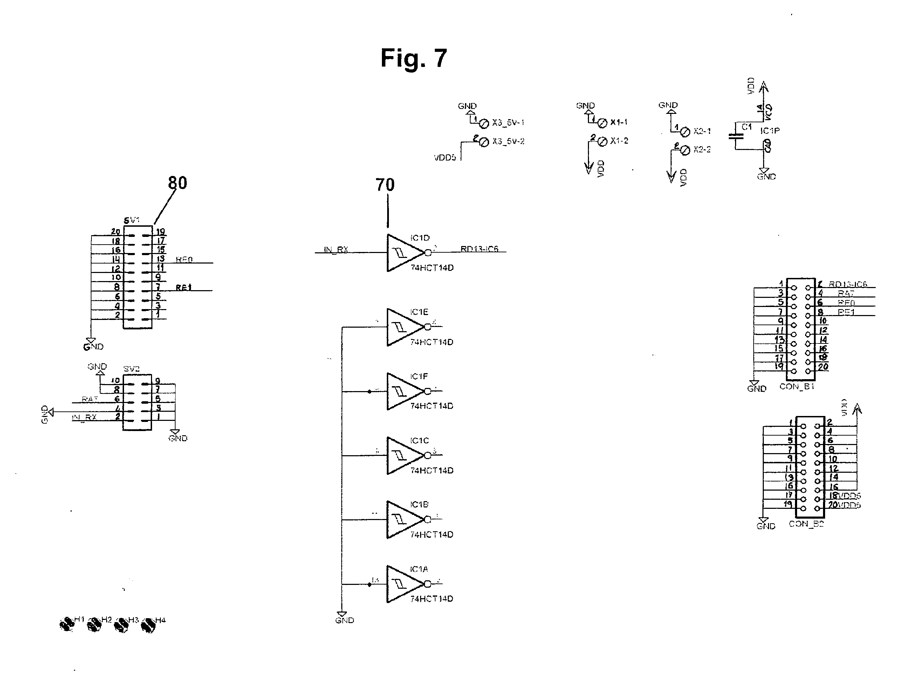

The manual for the RFID-smartcard (7) connection of Figure 1 consists of the following components:
- 10:: RFID transmission board (Figure 2).
- 20:: RFID reception board (Figure 3).
- 30:: main control board with the connector to the smartCard (1) (Figure 1).
- 40:: RFID insulation board (Figure 4).
- 50:: antenna with the RFID tag (5) (Figure 4).
- 60:: power supply board (Figure 5).
- 70:: fusion board in charge of the connection between the main board and the RFID components (Figure 7).
- 80:: connector to the smartcard (Figure 7).

The connection between the main board (30) and the fusion board (70) is carried out by means of "flat cables". The correspondence between the connectors of both boards (30), (70) is a pin-to-pin correspondence.

Figure 4 shows the details of the connection between the insulation board (40) and the RFID transmission board (10) and RFID reception board (20). The meaning of the different connections is the following:
11: connection with the RFID transmission board.
21: connection with the RFID reception board.
51: connection with the antenna.

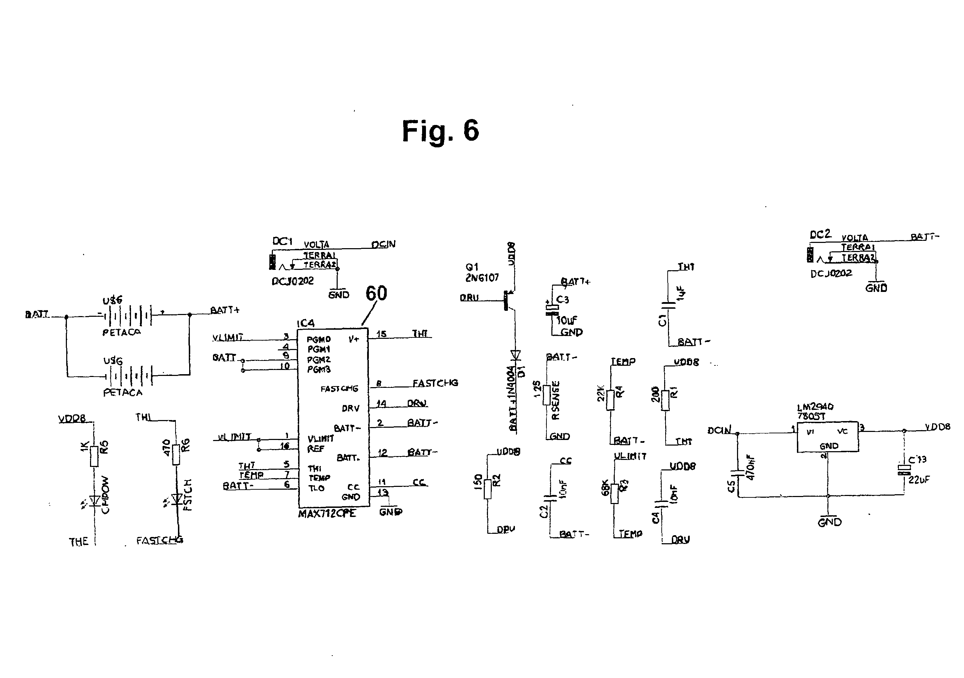

Finally, Figure 6 shows the connections between the power supply board (60) and the main board (30). The connector (100) corresponds to the power supply input of the main board which must be connected to the connector (200) of the power supply board (60). The pin (300) must be connected to a 9V transformer to charge the batteries.

An example of the coding of the information on the RFID tag (5) is given below.

When the card (1) is active (it deducts credit) its state is written in the UID bank (12 bytes) of the RFID tag (5) every certain time interval. The format used to code the information in the UID is preferably the following:Byte 0:

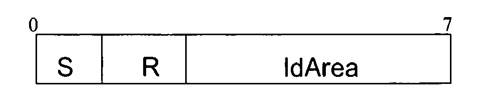

bit 0 (S): state of the system. 1 = operating system.
0= inactive system. In this case, the remaining bits of the UID are not taken into account.
bit 1-2 (R): space reserved for future extensions
bit 3-7 (IdArea): identifier of the charging area.
Bytes 1-3: balance of the card at the time instant at which the information has been saved in the tag. This information will be saved in euro cents, for example, the value 276.34 EUR would correspond to the value 27634.
Bytes 4-5: value of the rate of the area. It is saved in the same format as the balance of the card.
Bytes 6-11: time instant at which the data have been saved in the card. It indicates the number of seconds elapsed from an earlier time.

The function carried out by this coding is *preparaEst()* of a "prog.c" file. As can be seen in the main program, to carry out the writing of the pointer to the RFID tag (5), it must start from position -2-. The positions corresponding to the pointers- 0- and - 1 - are used to save the CRC. The information about the reading of the tags (5) can be found in the RFID folder of the RFID reader (4). As can be seen, the reader creates a file the name of which is the UID value of the read tag (5).

To facilitate the interaction of the user with the Pic-Smartcard (7), an LCD display (3), four push-buttons (*P1, P2, P3 and P4*) and three LEDs (*L1, L2 and L3*) have been provided. Figure 1 generally indicates the location of each of these elements in the board.

The following table indicates the function of each of these elements:

| Element | Function |
|---|---|
| P1 | Parking start/end. |
| P2 | Area selector. Cancellation of the area selection process/It |
| P3 | wakes up from the low consumption mode. |
| P4 | System reset |
| L1 | Connection with the reader/Parking activated. The system enters the low consumption mode (when |
| L2 | the LED is off). |
| L3 | The Pic-Smartcard is on. |

The parking start process will consist of the following steps:
1. If the card is in the low consumption mode (L2 off), button P3 must be pressed.
2. To start the parking the user must press the start button.
3. The area selection display will appear. The name and the rate of the active area at that time will appear in one of the lines of the LCD (3). The change from one area to the next can be done with the area selection button (P3). Once the desired area appears on the LCD (3), the start button (P1) must be pressed again. The reset button (P4) must be pressed to cancel the area selection process.
4. Once the start button (P1) has been pressed, the parking will start. The following information will appear on the LCD (3) during this process:
   - Parking time: hh:mm (1^{st} line)
   - Remaining balance. (1^{st} line)
   - Name of the active area (2^{nd} line)

To start the communication with the computer, the card containing the eight contacts placed according to the 7816 standard must first be introduced inside the reader. Once the card is introduced, the program can be run.

Once said program has been run, if no error has occurred, a message with the current dare and time and a warning that the time of the Pic-Smartcard (7) has been updated will appear on the display.

The successive operations will be shown in their respective displays with the relevant texts or information.

Once this message has appeared, the main menu of the program appears by pressing any key.

The user must enter the desired option and press enter. The steps to be followed to carry out each of the options of the main menu are explained below.

Consult balance: this operation serves for the user to consult the credit available in the card.

Top up balance: this operation serves to add credit to the card. When the option of the main menu is chosen, indicating that a balance top up operation is to be carried out, the program will ask the user the amount he or she wishes to top up. The user must enter said amount and press enter. Once the amount has been entered, a message will be shown on the display indicating whether the operation has been carried out successfully or, on the other hand, there has been an error. In the event that the operation has been carried out successfully, the new balance of the card will be shown.

Decreasing (reducing) balance: this operation serves to decrease credit from the card. When the option of the main menu is chosen, indicating that a balance decrease operation is to be carried out, the program will ask the user the amount he or she wishes to decrease. The user must introduce said amount and press enter. Once the amount has been entered, a message will be shown on the display indicating whether the operation has been carried out successfully or, on the other hand, there has been an error. In the event that the operation has been carried out successfully, the new balance of the card will be shown.

Reset: this operation is used to reset the card. If the card is successfully reset, it will be shown on the display.

Send area information: this operation serves to enable the user to load a list of areas with their corresponding rates. If this operation is carried out successfully it will be shown on the display.

Consult area information: this operation serves to enable the user to consult the list of areas together with their corresponding rates stored in the card. The list of areas will be shown in a column in which a different area will be shown in each line, indicating the name of the area and its corresponding rate.

Update time: this operation is used for the card to update the date and time. It is highly recommendable for it to be used when a relatively long time has elapsed from the last top-up. After this operation has been carried out successfully, it will appear on the display.

Show time: this option simply shows the time and date of the system on the display. The second and third lines correspond to different formats used by the computer to update the date and time of the card, the main menu appears by pressing any key.

Consult last top-up: this operation is used to know the data stored in the card about the last top-up carried out.

The following table shows the abbreviations used and what they refer to:

| | |
|---|---|
| UrATREF | Top-up code formed by 8 bytes |
| urTTREFC | Top-up entity identifier formed by 4 bytes |
| urCantidad | Amount which has been topped up |
| UrHora | Date and time at which the top-up has been carried out |

Consult activations: this operation is used to know the activations stored in the card. The last three activations of each area are saved.

Each activation is numbered with the character 'Z' followed by two digits. The first digit indicates the area in which the activation has occurred, whereas the second digit indicates the activation number, to thus be able to differentiate up to three activations in each area.

The following information about each activation can be seen:
- Date and time of the start of activation.
- Date and time of the end of activation.
- Name of the area.
- Rate of the area.
- Balance before activation.
- Balance after activation.

Having sufficiently described the nature of the invention, it is stated for the relevant purposes that it is not limited to the exact details of this disclosure, but rather on the other hand, modifications considered to be suitable will be introduced therein, provided that they do not alter the essential features thereof, which are claimed below.

## Claims

1. An automatic payment system for the urban parking phases of vehicles using radio frequency (RFID), consisting of an electronic card which is installed inside the vehicle and which is **characterized by** having: an LCD display (3) for the user to interact directly with the system also; an ultra high frequency (UHF) RFID tag reader/writer (4) together with a passive tag (5) adhered thereto and with the interposition of a smart transmitter/receiver (transceiver) (8) with UHF RFID technology; an RFID reader/writer (4) the objective of which will be to read and write the necessary data on the passive tag (5), which can in turn be read by an external RFID reader (6) and with an interface (7) which allows communicating with the SmartCard reader/writer (4) following the ISO 7816 protocol.

2. The automatic payment system for the urban parking phases of vehicles using radio frequency (RFID) according to claim 1, **characterized by** being a portable, neither fixed nor stationary, reader.

3. The automatic payment system for the urban parking phases of vehicles using radio frequency (RFID) according to claim 1, **characterized in that** the communication between the passive tag (5) and the card (1) or between the tag (5) and the external RFID reader (6) follows the ISO 18000-6c protocol.

4. The automatic payment system for the urban parking phases of vehicles using radio frequency (RFID) according to claim 1, which interface is **characterized in that** it will serve to modify internal data of the actual card (1), such as for example the total balance, charging information and other different operations.

5. The automatic payment system for the urban parking phases of vehicles using radio frequency (RFID) according to claims 1 and 3 for the physical connection between the different components and on the coding of the data in the passive RFID tag, **characterized in that** the coding of the information contained in the tag (5) will subsequently be read by an external RFID reader (6).

6. The automatic payment system for the urban parking phases of vehicles using radio frequency (RFID) according to claim 1, which card of the system is **characterized in that** it consists of a set of buttons (2) interacting on a general microcontroller (9) for the activation thereof.

7. The automatic payment system for the urban parking phases of vehicles using radio frequency (RFID) according to claims 1 and 4, which connection of the RFID-smartcard interface is **characterized in that** it consists of the following components:
10: RFID transmission board.
20: RFID reception board.
30: main control board with the connector to the smartCard (1).
40: RFID insulation board.
50: antenna with the RFID tag (5).
60: power supply board.
70: fusion board in charge of the connection between the main board and the RFID components.
80: connector to the smartcard.

8. The automatic payment system for the urban parking phases of vehicles using radio frequency (RFID) according to the previous claims, which card is **characterized in that** it consists of a (9V) power source connected to the actual battery of the vehicle or to small solar energy photovoltaic panels or any other charger.
